# EUROPEAN PATENT APPLICATION

(11) **EP 4 613 723 A1**
(43) Date of publication of application: **10.09.2025**
(21) Application number: 25155259.2
(22) Date of filing: 31.01.2025
(51) Int. Cl.: C04B 35/56, C04B 35/58

(54) **METHODS FOR FORMING HIGH TEMPERATURE CERAMIC COMPONENTS AND COMPONENTS FORMED THEREBY**

(30) Priority: 23.02.2024 US 202418585307
(71) Applicant: Honeywell International Inc., Charlotte, NC 28202 (US)
(72) Inventor: MEHR, Mehrad, Charlotte, 28202 (US)
(74) Representative: Ingrassia, Fisher & Lorenz UK Ltd.

(57) **Abstract**

Methods for forming ceramic components and the component formed thereby are provided. The methods include producing a green body including a primary powder and a sacrificial powder, wherein the green body is elongated relative to a first axis to account for anisotropic shrinkage during sintering thereof, performing a direct current sintering (DCS) process on the green body under axial loading along the first axis and at elevated temperatures sufficient to sinter the green body and produce an intermediate component having a first portion including a sintered ceramic material formed from the primary powder and a second portion including the sacrificial powder or a derivative thereof, and removing the sacrificial powder or the derivative thereof from the intermediate component leaving voids and/or pathways within the first portion and thereby producing the ceramic component.

## Description

### TECHNICAL FIELD

The present invention generally relates to ceramic component manufacturing, and more particularly relates to systems and methods for producing components from high temperature ceramics with internal voids and/or pathways.

### BACKGROUND

High temperature ceramic components have a plurality of applications in the aerospace industry. However, components formed of these materials may be challenging to produce, especially components having complex shapes and/or complex internal voids, passages, and the like. For some materials, obtaining a desired structure via a machining process may be very difficult or practically impossible. Unfortunately, many of these materials undergo shrinkage during sintering making it difficult to obtain near net-shape products that do not require post processing such as machining.

Hence, there is a need for systems and methods capable of producing components from high temperature ceramics with reduced need for post processing such as machining. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for forming a ceramic component. In various embodiments, the method includes producing a green body including at least a primary powder and a sacrificial powder, wherein the green body is elongated relative to a first axis to account for anisotropic shrinkage during sintering thereof, performing a direct current sintering (DCS) process on the green body under axial loading along the first axis and at elevated temperatures sufficient to sinter the green body and produce an intermediate component having a first portion including a sintered ceramic material formed from the primary powder and a second portion including the sacrificial powder or a derivative thereof, and removing the sacrificial powder or the derivative thereof from the intermediate component leaving voids and/or pathways within the sintered ceramic material and thereby producing the ceramic component.

A method is provided for forming a ceramic component. In various embodiments, the method includes generating an initial 3D model of the ceramic component, characterizing an expected anisotropic shrinkage of the green body of the ceramic component under direct current sintering conditions, elongating the initial 3D model along the first axis in accordance with the expected anisotropic shrinkage to produce a final 3D model of the green body, producing a green body by depositing a primary powder and a sacrificial powder with an additive manufacturing system using the final 3D model of the green body, performing a direct current sintering (DCS) process on the green body under axial loading along the first axis and at elevated temperatures sufficient to sinter the green body and produce an intermediate component having a first portion including a sintered ceramic material formed from the primary powder and a second portion including the sacrificial powder or a derivative thereof, and removing the sacrificial powder or the derivative thereof from the intermediate component leaving voids and/or pathways within the sintered ceramic material and thereby producing the ceramic component.

A component is provided that, in various embodiments, is produced by a method includes producing a green body including at least a primary powder and a sacrificial powder, wherein the green body is elongated relative to a first axis to account for anisotropic shrinkage during sintering thereof, performing a direct current sintering (DCS) process on the green body under axial loading along the first axis and at elevated temperatures sufficient to sinter the green body and produce an intermediate component having a first portion including a sintered ultra-high temperature ceramic material formed from the primary powder and a second portion including the sacrificial powder or a derivative thereof, and removing the sacrificial powder or the derivative thereof from the intermediate component leaving voids and/or pathways within the sintered ultra-high temperature ceramic material and thereby producing the ceramic component.

Furthermore, other desirable features and characteristics of the methods and the component will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a flowchart illustrating an exemplary method for producing a high temperature ceramic component;
FIG. 2 schematically represents a cross-sectional view of a green body formed by an additive manufacturing process in accordance with an embodiment;
FIG. 3 schematically represents a cross-sectional view of the green body of FIG. 2 disposed within a direct current sintering (DCS) system in accordance with an embodiment;
FIG. 4 schematically represents a cross-sectional view of an intermediate component formed by performing a DCS process on the green body of FIGS. 1 and 2 in accordance with an embodiment; and
FIG. 5 schematically represents a cross-sectional view of a high temperature ceramic component formed by removing a sacrificial material from the intermediate component of FIG. 4.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Systems and methods disclosed herein provide for producing components from high temperature ceramics. In some examples, the ceramic components may be produced with near net shapes that require little or no post processing, such as machining, to obtain a desired final shape. In some examples, the components produced by the systems and methods disclosed herein may be configured to be installed on an aircraft.

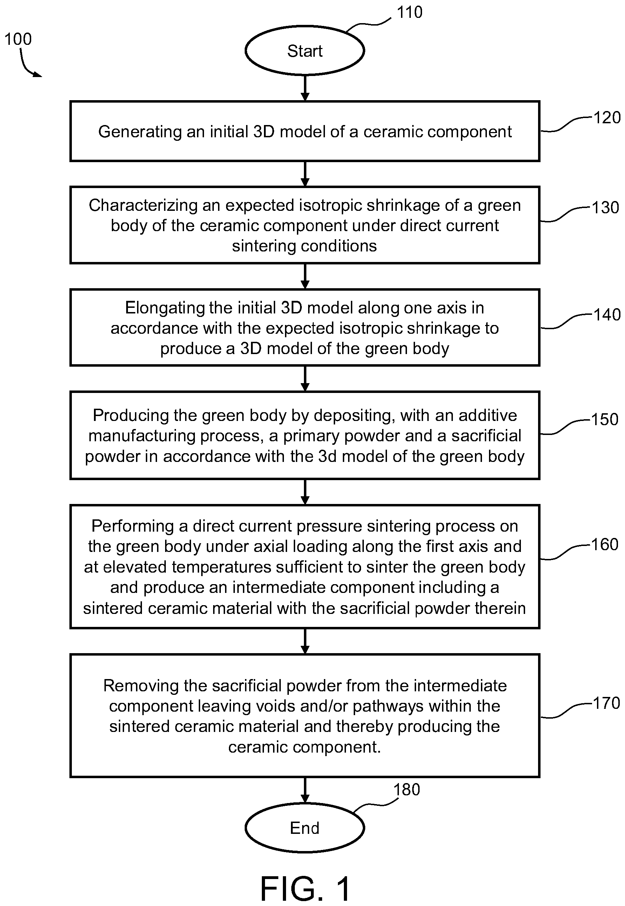

Referring initially to FIG. 1, a flowchart is presented illustrating an exemplary method 100 for producing a high temperature ceramic component. The method 100 may start at 110.

At 120, the method 100 may include generating an initial digital three-dimensional (3D) model of the ceramic component (e.g., with a computer-aided design (CAD) software).

At 130, the method 100 may include characterizing or determining an expected anisotropic shrinkage of a green body of the ceramic component. The expected anisotropic shrinkage may be determined based on, for example, the material properties of the green body, the composition of the green body, the parameters of the sintering process (e.g., temperatures, pressures, durations), etc. With the expected anisotropic shrinkage characterized, the green body can be formed in a manner that, upon sintering, will shrink to a predetermined final shape of the ceramic component.

At 140, the method 100 may include generating a final digital 3D model of the green body (e.g., with a computer-aided design (CAD) software). The final digital 3D model may be generated by elongating the initial 3D model of the ceramic component along a first axis in accordance with the expected anisotropic shrinkage.

At 150, the method 100 may include producing the green body by an additive manufacturing process based on the final digital 3D model thereof. As used herein, additive manufacturing processes include various processes wherein three-dimensional objects are produced layer-by-layer. In various examples, the additive manufacturing process may include segmenting the final digital 3D model into thin cross-sectional layers, and then depositing build materials layer-by-layer with an additive manufacturing system to form the green body. Each of the deposited layers may correspond to one of the cross-sectional layers of the digital 3D model. Nonlimiting examples of specific additive manufacturing processes that may be used to produce the green body may include vat photopolymerization material jetting, binder jetting, material extrusion, powder bed fusion, directed energy deposition, and sheet lamination.

In various examples, the green body includes at least a first portion formed of a first composition comprising a primary powder and a separate, second portion formed of a second composition comprising a sacrificial powder. The first portion and the second portion each have predetermined shapes in the green body that may be maintained with other components of the first and second compositions, such as various binders and/or additives. In various examples, the second portion may be partially or entirely encased within the first portion.

In some examples, the method 100 may include performing a debinding process of the green body to remove at least some of one or more binders therein.

At 160, the method 100 may include performing a sintering process on the green body to bond the particles of the primary powder together. In some examples, the sintering process may include burning off or decomposing one or more binders and/or additives from the first composition and/or the second composition. In various examples, the sintering process may be a direct current sintering (DCS) process (also known as spark plasma sintering (SPS)) that includes heating the green body at elevated temperatures and for a period of time sufficient to sinter at least portions of the green body (e.g., the primary powder) while simultaneously applying an axial load on the green body along the first axis thereof. The temperatures, time periods, and pressures applied to the green body may vary depending on the composition of the green body.

Upon completion of the sintering process, the green body may be converted into an intermediate component that includes a sintered ceramic material (e.g., produced from the primary powder). In various examples, the intermediate component may include the sacrificial powder or a derivative thereof, such as a sintered ceramic material produced from the sacrificial powder. In some examples, sintering of the green body may result in bonding of the particles of the sacrificial powder. In some examples, sintering of the green body may result in densification of the second portion thereof and/or the sacrificial powder. In some examples, sintering of the green body may not result in bonding of the particles of the sacrificial powder or densification of the second portion thereof or the sacrificial powder.

At 170, the method 100 may include removing the sacrificial powder or a derivative thereof from the intermediate component leaving voids and/or pathways within the first portion defined by the sintered ceramic material and thereby producing the ceramic component. The sacrificial powder or derivative thereof may be removed from the intermediate component with various processes. In some examples, the sacrificial powder or derivative thereof may be removed by an oxidation process. For example, the sacrificial powder or derivative thereof may be exposed to an oxidizing agent which chemically reacts therewith to produce one or more gases and/or other byproducts. Nonlimiting examples of oxidizing agents may include oxygen (air), ozone, or other chemical compounds containing oxygen. For example, if the sacrificial powder or derivative thereof is graphite or a graphite-containing material, an oxidizing agent may be applied to react with the carbon in the graphite, leading to the oxidation of the carbon to form carbon dioxide (CO₂) gas or carbon monoxide (CO) gas at temperatures of 800 °C or above.

In some examples, the sacrificial powder or derivative thereof may be removed by a chemical etching process. For example, the intermediate component 400 may be submerged in an etchant solution that is configured to selectively react with the sacrificial powder or the derivative thereof to dissolve the sacrificial powder without affecting the sintered ceramic material.

Depending on the composition of the sacrificial powder or the derivative thereof and the process used for removal thereof, the method 100 may include one or more cleaning processes configured to remove any remaining debris within the voids and/or pathways, such as byproducts remaining from the removal of the sacrificial powder of the derivative thereof.

The method 100 may end at 150.

In some examples, the primary powder may include an ultra-high temperature ceramic (UHTC). As used herein, UHTCs include certain refractory ceramic materials that are capable of maintaining their properties (e.g., not degrading) at elevated temperatures of 2000 °C or greater. Nonlimiting examples of suitable ultra-high temperature ceramic materials may include certain carbides, nitrides, and borides.

In various examples, the sacrificial powder may include at least one sacrificial material that is capable of maintaining its properties during sintering of the green body, for example, at temperatures of 1000 °C or greater, such as 1500 °C or greater, such as 2000 °C or greater, for a period of time sufficient to sinter substantially all of the primary powder, such as 95% density, such as 96% density, such as 97% density, such as 98% density, such as 99% density or greater, and further capable of being removed upon completion of the sintering process. A nonlimiting example of a suitable sacrificial material may be various graphite powders.

In various examples, the second composition may be tailored to have a shrinkage rate during sintering based on the characterized expected shrinkage of the first composition. In some examples, the second composition may be tailored to match the characterized expected shrinkage of the first composition. In some examples, the second composition may be tailored to have less shrinkage during sintering relative to the first composition. In some examples, the second composition may be tailored to have more shrinkage during sintering relative to the first composition. In various example, the shrinkage rate of the second composition may be adjusted by including one or more additives. For example, the second composition may include a filler material configured to support the voids and/or passageways during shrinkage of the green body.

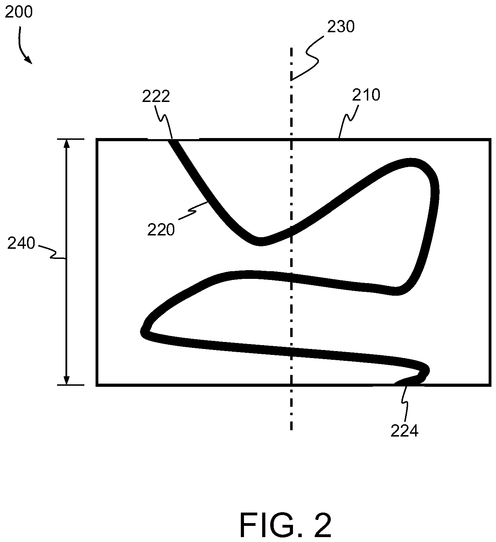

FIGS. 2-5 illustrate a nonlimiting example of a ceramic component produced by the method 100. It should be noted that this example is merely for illustrative purposes and the ceramic component is not limited to any particular size, shape, or composition.

FIG. 2 is a cross-sectional view illustrating an exemplary green body 200 that includes a first portion 210 formed of a first composition comprising a primary powder and a second portion 220 formed of a second composition comprising a sacrificial powder. In this example, the second portion 220 defines a tortuous pathway encased within the first portion 210. The second portion 220 is exposed at first and second ends 222 and 224 of the pathway defined thereby.

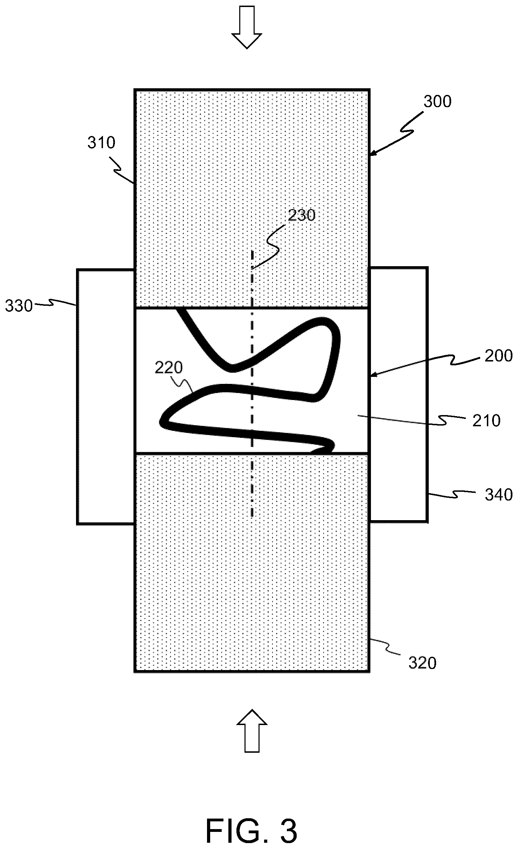

FIG. 3 is a cross-sectional view illustrating the green body 200 of FIG. 2 disposed within a compartment of a DCS system 300. The exterior surfaces of the green body 200 are in direct contact with interior surfaces of the DCS system 300. In the view of FIG. 3, the green body 200 is in contact with interior surfaces of first, second, third, and fourth members 310, 320, 330, and 340. Notably, other exterior surfaces of the green body 200 may be in contact with other members of the DCS system 300 not shown in FIG. 3. During the sintering process, an electric current is applied to one or more members of the DCS system 300, such as one or more of the first, second, third, and fourth members 310, 320, 330, and 340, to generate elevated temperatures sufficient to sinter the primary powder of the green body 200. In addition, a predetermined load is applied to the green body 200 along the first axis 230 thereof to ensure anisotropic shrinkage along the first axis 230. In some examples, the first member 310 moves towards the green body 200 to apply the load while the remaining members of the DCS system 300, including the second, third, and fourth members 320, 330, and 340 remain in fixed positions. In other examples, both the first and second members 310 and 320 move toward the green body 200 to apply the load while the remaining members of the DCS system 300, including the third and fourth members 330 and 340 remain in fixed positions.

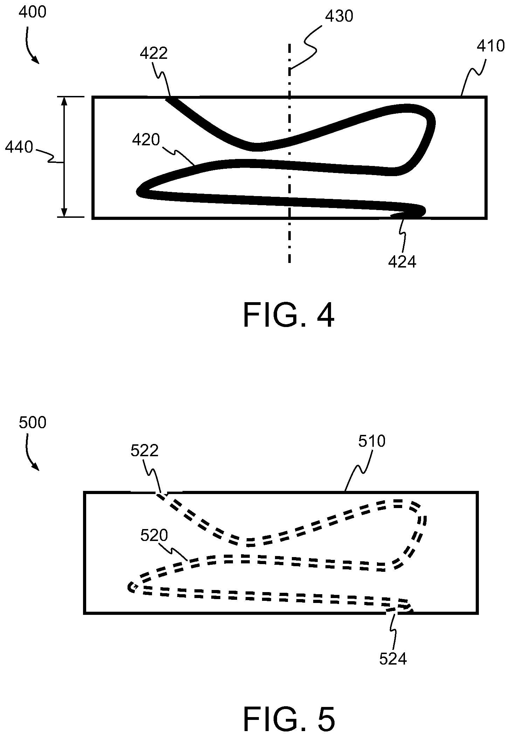

FIG. 4 is a cross-sectional view illustrating an intermediate component 400 produced from the green body 200 via sintering with the DCS system 300. The intermediate component 400 includes a first portion 410 comprising a sintered ceramic material formed from the primary powder and a second portion 420 comprising the sacrificial powder or a derivative thereof. Both the first portion 410 and the second portion 420 have shapes formed by anisotropic shrinkage of the green body 200, and therefore are derived directly from the shapes of the first portion 210 and the second portion 220 of the green body 200. The anisotropic shrinkage is illustrated by a dimensional change along a first axis 430 of the intermediate component 400 relative to the first axis 230 of the green body 200. In particular, the green body 200 has a first dimension 240 measured along the first axis 230 that is greater than a second dimension 440 measured along the first axis 430 of the intermediate component 400.

FIG. 5 is a cross-sectional view illustrating a ceramic component 500 formed by removing the sacrificial powder or the derivative thereof from the second portion 420 of the intermediate component 400. The ceramic component 500 includes a first portion 510 formed of the sintered ceramic material. An empty, elongated, tortuous pathway 520 is defined through the first portion 510 by internal surfaces of the first portion 510. The pathway 520 includes a first opening at a first end 522 thereof and a second opening at a second end 524 thereof.

The systems and methods disclosed herein provide various benefits over certain existing systems and methods. For example, the systems and methods disclosed herein may provide for producing ceramic components with complex internal voids and/or pathways that may be possible when using various other existing systems and methods. In some examples, the systems and methods disclosed herein may provide for producing components with near net shapes that necessitate little or no post processing such as machining.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of forming a ceramic component, comprising:
producing a green body including at least a primary powder and a sacrificial powder, wherein the green body is elongated relative to a first axis to account for anisotropic shrinkage during sintering thereof;
performing a direct current sintering (DCS) process on the green body under axial loading along the first axis and at elevated temperatures sufficient to sinter the green body and produce an intermediate component having a first portion including a sintered ceramic material formed from the primary powder and a second portion including the sacrificial powder or a derivative thereof; and
removing the sacrificial powder or the derivative thereof from the intermediate component leaving voids and/or pathways within the sintered ceramic material and thereby producing the ceramic component.

2. The method of claim 1, wherein removing the sacrificial powder or the derivative thereof is performed by an oxidation process.

3. The method of claim 1, wherein removing the sacrificial powder or the derivative thereof is performed by a chemical etching process.

4. The method of claim 1, wherein the sintered ceramic material of the ceramic component is a carbide, nitride, or boride.

5. The method of claim 1, wherein the sacrificial powder includes graphite.

6. The method of claim 1, wherein the sacrificial powder includes a filler material configured to support the voids and/or passageways during shrinkage of the green body.

7. The method of claim 1, wherein the sacrificial powder is densified or sintered during the DCS process.

8. The method of claim 1, wherein the ceramic component is configured to be installed as a component of an aircraft.

9. The method of claim 1, further comprising:
generating an initial 3D model of the ceramic component;
characterizing an expected anisotropic shrinkage of the green body of the ceramic component under direct current sintering conditions; and
elongating the initial 3D model along a first axis in accordance with the expected anisotropic shrinkage to produce a final 3D model of the green body,
wherein producing the green body includes depositing the primary powder and the sacrificial powder with an additive manufacturing system using the final 3D model of the green body.

10. A component, produced by a method comprising:
producing a green body including at least a primary powder and a sacrificial powder, wherein the green body is elongated relative to a first axis to account for anisotropic shrinkage during sintering thereof;
performing a direct current sintering (DCS) process on the green body under axial loading along the first axis and at elevated temperatures sufficient to sinter the green body and produce an intermediate component having a first portion including a sintered ultra-high temperature ceramic material formed from the primary powder and a second portion including the sacrificial powder or a derivative thereof; and
removing the sacrificial powder or the derivative thereof from the intermediate component leaving voids and/or pathways within the sintered ultra-high temperature ceramic material and thereby producing the component, wherein the component is configured for passage therethrough of a fluid.

11. The component of claim 10, wherein the sintered ultra-high temperature ceramic material is a carbide, nitride, or boride.

12. The component of claim 10, wherein removing the sacrificial powder or the derivative thereof from the intermediate component produces an elongated, tortuous pathway through the first portion and defined by interior surfaces of the first portion, the elongated, tortuous pathway having at least one opening at an exterior surface of the first portion.

13. The component of claim 10, wherein the component is configured to be installed as a component of an aircraft.
